# EUROPEAN PATENT APPLICATION

(11) **EP 3 842 630 A1**
(43) Date of publication of application: **30.06.2021**
(21) Application number: 20208710.2
(22) Date of filing: 19.11.2020
(51) Int. Cl.: F02F 7/00, B60K 5/12

(54) **FLEXIBLE ENGINE MOUNTING STRUCTURE**

(30) Priority: 25.12.2019 CN 201911355670
(71) Applicant: Cummins, Inc., Columbus, Indiana 47201 (US)
(72) Inventor: ZHOU, Xiling, Wuhan, Hubei Province (CN)
(74) Representative: CSY Herts

(57) **Abstract**

An engine block includes an engine block body and a mounting structure coupled to the engine block body. The mounting structure includes a first support with a first base, a first face, and a first body extending from the first base to the first face. A second support includes a second base, a second face, and a second body extending from the second base to the second face. A first wall extends from the first support to the second support. The first wall includes a first front surface, a first back surface, and a first intermediate surface defined by the first front surface and the first back surface. The wall defines a first aperture that extends through the first wall and at least partially through the first support.

## Description

### CROSS-REFERENCE TO RELATED APPLICATIONS

This application claims priority to and the benefit of Chinese Patent Application No. 201911355670.4, filed December 25, 2019, the content of which is incorporated by reference herein in its entirety.

### TECHNICAL FIELD

The present invention relates generally to systems for mounting an engine block to a chassis of a vehicle.

### BACKGROUND

In a vehicle, an engine block is the structure that contains the cylinders and other various components of the engine (e.g, the crankshaft, pistons, etc.). Engine blocks are offered in a variety of different sizes and can vary in their arrangement and their connections to other vehicle components such as a flywheel housing and a transmission. To secure an engine block to a vehicle, the engine block is mounted to the vehicle chassis with fasteners to corresponding connection points located on the engine block and the chassis. The various arrangements in which engine blocks are offered may require different connection point designs to securely mount the engine block to the chassis or to other components. Some engine blocks require connection points in one or more locations on a front surface of the engine block. Some engine blocks require connection points in one or more locations on a side surface of the engine block.

### SUMMARY

In one set of embodiments, an engine block includes an engine block body and a mounting structure coupled to the engine block body. The mounting structure includes a first support with a first base, a first face, and a first body extending from the first base to the first face. A second support includes a second base, a second face, and a second body extending from the second base to the second face. A first wall extends from the first support to the second support. The first wall includes a first front surface, a first back surface, and a first intermediate surface defined by the first front surface and the first back surface. The wall defines a first aperture that extends through the first wall and at least partially through the first support.

In another set of embodiments, an engine block includes an engine block body and a mounting structure coupled to the engine block body. The mounting structure comprises a first support comprising a first base, a first face, and a first body extending from the first base to the first face, the first support defining a first aperture extending through the first face and partially through the first body. A second support includes a second base, a second face, and a second body extending from the second base to the second face, the second support defining a second aperture extending through the second face and partially through the second body. A third support includes a third base, a third face, and a third body extending from the third base to the third face, the third support defining a third aperture, the third aperture extending through the third face and partially through the third body. A fourth support includes a fourth base, a fourth face, and a fourth body extends from the fourth base to the fourth face, the fourth support defining a fourth aperture, the fourth aperture extending through the fourth face and partially through the fourth body. A first wall extends from the first support to the second support.

In yet another set of embodiments, a method for manufacturing an engine block with a flexible mounting structure includes providing an engine block with a side surface and a front surface. The engine block includes a first support extending from a side surface of the engine block, a second support extending from the side surface of the engine block, a third support extending from the side surface of the engine block, and a fourth support extending from the side surface of the engine block. A first wall extends from the side surface of the engine block, the first wall coupled to the first support and the second support. The first wall includes a first front surface, a first back surface, and a first intermediate surface defined by the first front surface and the first back surface, wherein the first front surface is substantially coplanar with the front surface of the engine block. The method includes determining whether a component to be mounted to the engine block will be mounted to the front surface of the engine block. In response to determining that the component will be mounted to the front surface of the engine block, the method includes performing secondary machining operations to configure the front surface of the engine block to receive the component.

### BRIEF DESCRIPTION OF THE DRAWINGS

The details of one or more implementations are set forth in the accompanying drawings and the description below. Other features, aspects, and advantages of the disclosure will become apparent from the description, the drawings, and the claims, in which:
FIG. 1 is an illustration of an engine block with a conventional front mounting structure.
FIG. 2 is an illustration of an engine block with a conventional side mounting structure.
FIG. 3 is an illustration of a portion of an engine block with a flexible mounting structure, according to a particular embodiment.
FIG. 4 is an illustration of the flexible mounting structure of FIG. 3 configured with a front mounting structure, according to a particular embodiment.
FIG. 5 is an illustration of a cross-section of the front mounting structure of FIG. 4.
FIG. 6 is an illustration of the flexible mounting structure of FIG. 3 configured with a side mounting structure, according to a particular embodiment.
FIG. 7 is an illustration of a cross-section of the side mounting structure of FIG. 6.
FIG. 8 is a flow diagram of a method of producing an engine block with a mounting structure, according to a particular embodiment.

### DETAILED DESCRIPTION

Following below are more detailed descriptions of various concepts related to, and implementations of, methods, apparatuses, and systems for directing fuel to a fuel injector of an internal combustion engine system. The various concepts introduced above and discussed in greater detail below may be implemented in any of numerous ways, as the described concepts are not limited to any particular manner of implementation. Examples of specific implementations and applications are provided primarily for illustrative purposes.

### I. Overview

In a vehicle, an engine block is the structure that contains the cylinders and other various components of the engine. The engine block is mounted to a vehicle chassis to secure the engine block in place. The engine block can be mounted to the chassis by connecting fasteners to corresponding connection points located on the engine block. Engine blocks are offered in a variety of different sizes and can vary in the arrangement of the cylinders and other components. The various arrangements in which engine blocks are offered may require different connection point designs to securely mount the engine block to the chassis.

Implementations herein relate to a system to provide for flexibility in mounting an engine block to a chassis of a vehicle or to other vehicle components. An engine block is manufactured with a flexible mounting structure that can be used in embodiments where the engine is mounted to a chassis via a front surface of the engine block or a side surface of the engine block. The engine block is manufactured such that one or more secondary manufacturing processes configure the engine block for front mounting or side mounting.

The various embodiments of the system described herein provide benefits that can be applied to engine blocks and subsequent engine block assembly operations. The flexible mounting structure provides for an efficient manufacturing process where a single base engine block can be customized to fit with various mounting arrangements. Incorporating such an engine block into a manufacturing process can also maintain or reduce the cost to produce the desired engine block.

### II. Conventional Engine Block Mounting Structures

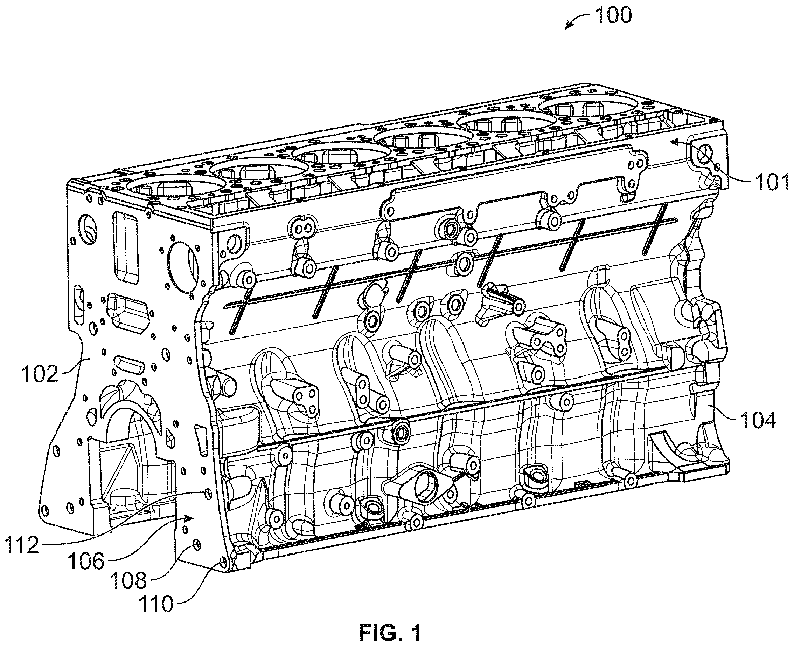

FIG. 1 is an illustration of an engine block 100 with a conventional front mounting structure 106. The engine block 100 can be any conventional engine block constructed from aluminum, cast iron, or any other suitable material. The engine block 100 can be manufactured using any conventional processes and operations used to manufacture an engine block (e.g., casting, machining, etc.). The engine block 100 includes an engine block body 101 with a front surface 102 and a side surface 104. The front surface 102 defines a front face, a back face, and an intermediate surface (e.g., an intake side casting surface) extending between the front face and the back face. The front mounting structure 106 is positioned on the front surface 102 and includes a first opening 108, a second opening 110, and a third opening 112. In an example embodiment, the first opening 108, the second opening 110, and the third opening 112 are threaded openings. The first opening 108, the second opening 110, and the third opening 112 extend through the front face and into the intermediate surface. The first opening 108, the second opening 110, and the third opening 112 are configured to receive a fastener (e.g., threaded, tapped, etc.) so as to secure the engine block 100 to a chassis of a vehicle or to secure other components to the engine block 100 via the front mounting structure 106.

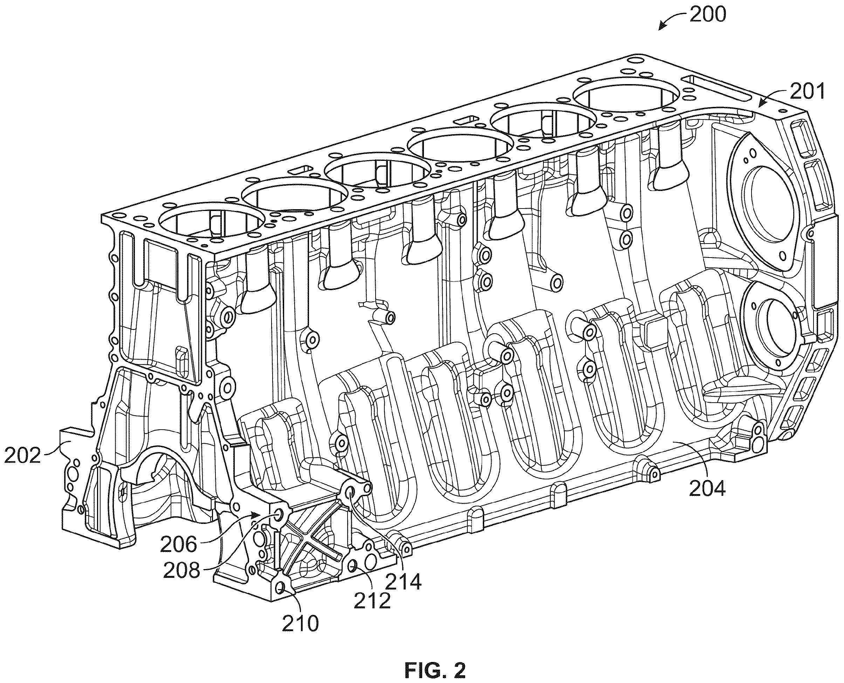

FIG. 2 is an illustration of an engine block 200 with a conventional side mounting structure 206. The engine block 200 can be any conventional engine block constructed from aluminum, cast iron, or any other suitable material. The engine block 200 can be manufactured using any conventional processes and operations used to manufacture an engine block (e.g., casting, machining, etc.). The engine block 200 includes an engine block body 201 with a front surface 202 and a side surface 204. The side mounting structure 206 extends from the side surface 204 and includes a first opening 208, a second opening 210, a third opening 212, and a fourth opening 214. The first opening 208, the second opening 210, the third opening 212, and the fourth opening 214 may be threaded openings. The first opening 208, the second opening 210, the third opening 212, and the fourth opening 214 are configured to receive a fastener (e.g., threaded, tapped, etc.) so as to secure the engine block 200 to a chassis of a vehicle or to secure other components to the engine block 200 via the side mounting structure 206.

The engine block 100 and the engine block 200 do not provide for flexibility in mounting the engine block 100 or the engine block 200 to a chassis. For example, a chassis may be sized to fit the engine block 200, but may only be configured to receive an engine block with a front mounting structure similar to the front mounting structure 106. In such situations with conventional engine block mounting structures, a different engine block with the appropriate mounting structure must be manufactured.

### III. Example Flexible Mounting Structure

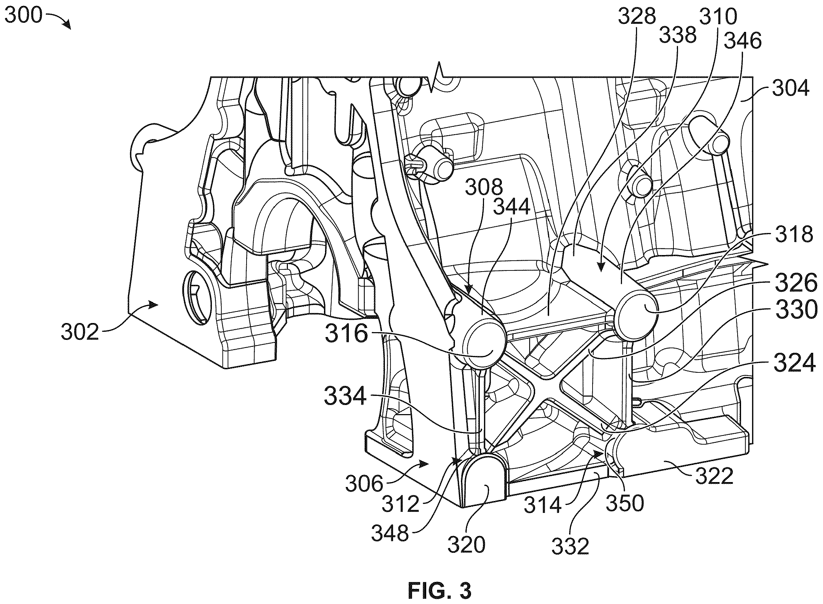

FIG. 3 is an illustration of a portion of an engine block 300 with a flexible mounting structure 306, according to a particular embodiment. The engine block 300 can be constructed from aluminum, cast iron, or any other suitable material. The engine block 300 can be manufactured using any conventional processes and operations used to manufacture an engine block (e.g., casting, machining, etc.). The engine block 300 includes a front surface 302 and a side surface 304. The front surface 302 defines a front face, a back face, and an intermediate surface extending between the front face and the back face. The flexible mounting structure 306 is integrally formed with both the front surface 302 and the side surface 304 such that the flexible mounting structure 306 extends away from the front surface 302 and from the side surface 304.

The flexible mounting structure 306 includes a first support 308, a second support 310, a third support 312, and a fourth support 314. The first support 308 includes a first face 316, a first base (not shown) integrally formed with the side surface 304, and a first body 344 extending from the first base to the first face 316. The second support 310 includes a second face 318, a second base 338 integrally formed with the side surface 304, and a second body 346 extending from the second base 338 to the second face 318. The third support 312 includes a third face 320, a third base (not shown) integrally formed with the side surface 304, and a third body 348 extending from the third base to the third face 320. The fourth support 314 includes a fourth face 322, a fourth base (not shown) integrally formed with the side surface 304, and a fourth body 350 extending from the fourth base to the fourth face 322. In some embodiments, the first body 344 and the third body 348 are integrated with the front surface 302. The first support 308 and the third support 312 do not include any hollow sections (e.g., the first support 308 and the third support 312 are constructed from solid material) so as to provide material in which apertures can be created for mounting fasteners. In some embodiments the first support 308 and the third support 312 are tapered from the first base and the third base, respectively. For example, a cross-sectional shape of the first support 308 is largest at the first base and is smallest at the first face 316, and a cross-sectional shape of the third support 312 is largest at the third base and is smallest at the third face 320. Shaped in the manner described, the tapered portions of the first support 308 and the third support 312 provide for manufacturability of the engine block 300 because the tapered portions allow the first support 308 and the third support 312 to be easily removed from a mold in which the engine block 300 is cast. In some embodiments, the cross-sectional shapes of the first base and the third base are circular. In some embodiments, the cross-sectional shapes can include other geometries (e.g, square, oval, rectangular, etc.).

The second support 310 and the fourth support 314 extend away from the side surface 304 and do not include any hollow sections (e.g., the second support 310 and the fourth support 314 are constructed from solid material) so as to provide material in which apertures can be created for mounting fasteners. In some embodiments the second support 310 and the fourth support 314 are tapered from the second base 338 and the fourth base, respectively. For example, a cross-sectional shape of the second support 310 is largest at the second base 338 and is smallest at the second face 318, and a cross-sectional shape of the fourth support 314 is largest at the fourth base and is smallest at the fourth face 322. In some embodiments, the cross-sectional shape is circular. In some embodiments, the cross-sectional shapes of the second base 338 and the fourth base are circular. Alternatively, the cross-sectional shapes can include other geometries (e.g., square, oval, rectangular, etc.). Shaped in the manner described, the tapered portions of the second support 310 and the fourth support 314 provide for manufacturability of the engine block 300 because the tapered portions allow the second support 310 and the fourth support 314 to be easily removed from the mold in which the engine block 300 is cast.

In the embodiment shown in FIG. 3, the first support 308, the second support 310, the third support 312, and the fourth support 314 are arranged to resemble a square shape. In other embodiments, the first support 308, the second support 310, the third support 312, and the fourth support 314 can be arranged in various other configurations (e.g., a rectangular shape, a triangular shape, a circular shape, etc.).

A first cross brace 324 is integrated with the first support 308 and the fourth support 314 and extends diagonally from the first support 308 to the fourth support 314 so as to couple the first support 308 and the fourth support 314 and reinforce the structure of the flexible mounting structure 306. In some embodiments, the first cross brace 324 extends from the side surface 304 and does not extend beyond a plane defined by the first face 316 and the fourth face 322. In some embodiments, the first cross brace 324 extends from the side surface 304 and extends beyond the plane defined by the first face 316 and the fourth face 322.

A second cross brace 326 is integrated with the second support 310 and the third support 312 and extends diagonally from the second support 310 to the third support 312 so as to couple the second support 310 and the third support 312 and reinforce the structure of the flexible mounting structure 306. In some arrangements, the second cross brace 326 extends from the side surface 304 and does not extend beyond a plane defined by the second face 318 and the third face 320. In some arrangements, the second cross brace 326 extends from the side surface 304 and extends beyond the plane defined by the second face 318 and the third face 320.

A first wall 328 is integrated with the first support 308 and the second support 310 and extends from the first support 308 to the second support 310 so as to couple the first support 308 and the second support 310. The first wall includes a top surface, a bottom surface, and an intermediate surface that fills the space between the top surface and the bottom surface. The first wall 328 does not include a hollow section (e.g., the first wall 328 is constructed from solid material) and serves to reinforce the structure of the flexible mounting structure 306.

A second wall 330 is integrated with the second support 310 and the fourth support 314 and extends from the second support 310 to the fourth support 314 so as to couple the second support 310 and the fourth support 314. The second wall 330 includes a top surface, a bottom surface, and an intermediate surface that fills the space between the top surface and the bottom surface. The second wall 330 does not include a hollow section (e.g., the second wall 330 is constructed from solid material) and serves to reinforce the structure of the flexible mounting structure 306.

A third wall 332 is integrated with the fourth support 314 and the third support 312 and extends from the fourth support 314 to the third support 312 so as to couple the fourth support 314 and the third support 312. The third wall 332 includes a top surface, a bottom surface, and an intermediate surface that fills the space between the top surface and the bottom surface. The third wall 332 does not include a hollow section (e.g., the third wall 332 is constructed from solid material) and serves to reinforce the structure of the flexible mounting structure 306.

A fourth wall 334 is integrated with the third support 312 and the first support 308 and extends from the third support 312 to the first support 308 so as to couple the third support 312 and the first support 308. The fourth wall 334 includes a top surface, a bottom surface, and an intermediate surface that fills the space between the top surface and the bottom surface. The fourth wall 334 does not include a hollow section (e.g., the fourth wall 334 is constructed from solid material) and serves to reinforce the structure of the flexible mounting structure. In some arrangements, the fourth wall 334 is integrated with the front surface 302 such that the top surface and the front surface 302 are the same surface (e.g., the top surface and the front surface 302 are coplanar). The fourth wall 334 can also be positioned adjacent to the front surface 302.

The flexible mounting structure 306 is designed to undergo further manufacturing processes to configure the flexible mounting structure 306 to receive additional components in various arrangements or to be assembled to various chassis configurations. Accordingly, the engine block 300 can be used as an initial engine block from which a finished engine block with various additional mounting configurations can be implemented. Therefore, incorporating the flexible mounting structure 306 provides for various alternative engine block configurations without the need to create new casting molds for each configuration, providing for greater manufacturing efficiency and lower manufacturing cost. In some embodiments, the flexible mounting structure 306 provides for coupling to the front surface 302. The flexible mounting structure 306 can also provide for coupling to the side surface 304. In an example arrangement, the flexible mounting structure provides for coupling to both the front surface 302 and the side surface 304.

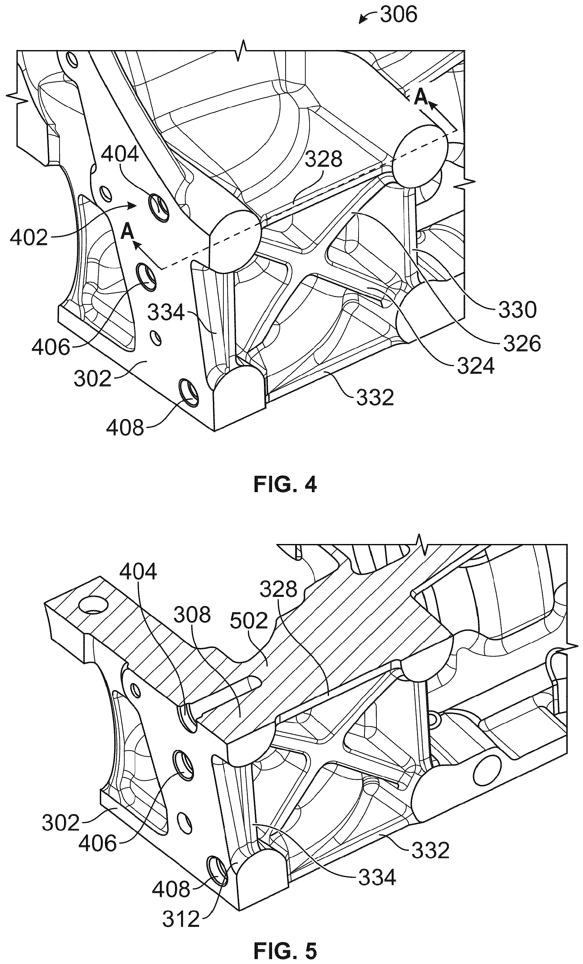

FIG. 4 is an illustration of the flexible mounting structure of FIG. 3 modified to include a front mounting structure 402, according to a particular embodiment. In some arrangements, the front mounting structure 402 is implemented in instances where one or more components are mounted to the front of the engine block 300, or when the engine block 300 is mounted to a chassis via one or more front mounts. The front mounting structure 402 includes a first aperture 404, a second aperture 406, and a third aperture 408 (collectively referred to as the apertures 604-610). The apertures 404-408 are configured to receive fasteners to couple one or more components to the front mounting structure 402. Accordingly, the apertures 404-408 can include features to receive the fasteners (e.g., threads, countersink, counterbore, etc.). When additional components (e.g., a transmission, a chassis, etc.) are coupled to the engine block 300, additional stresses are imparted to the engine block 300. To provide additional support to the engine block 300 to counteract the additional stresses, the first cross brace 324, the second cross brace 326, the first wall 328, the second wall 330, the third wall 332, and the fourth wall 334 reinforce the front mounting structure 402 to withstand the stresses imparted by the additional components. As shown, the apertures 404-408 include three apertures. In various embodiments, the number of apertures in the front mounting structure 402 can include more or fewer apertures.

FIG. 5 is an illustration of a cross-section of the front mounting structure 402 of FIG. 4. The first aperture 404 extends through the front surface 302 and into an intermediate surface 502, the intermediate surface 502 being in between the top surface and the bottom surface of the first wall 328. The intermediate surface 502 provides material from which the first aperture 404 is manufactured. In an example embodiment, the first aperture 404 can be manufactured by drilling a hole into the intermediate surface of the first wall 328, creating threads in the hole using a tapping tool, and creating a counterbore or countersink at the front surface 302. As shown, the first aperture 404 extends through the first support 308 and into the first wall 328. In some embodiments, the first aperture 404 extends into the first support 308 and does not extend into the first wall 328.

The second aperture 406 extends through the front surface 302 and into the fourth wall 334. The intermediate surface between the front surface 302 and the back surface of the fourth wall provides material from which the second aperture 406 is manufactured. In some embodiments the second aperture 406 extends entirely through the fourth wall 334. In some arrangements, the second aperture 406 extends partially through the fourth wall 334. In an example embodiment, the second aperture can be manufactured by drilling a hole through the fourth wall 334 to provide space for a bolt to fasten a component to the front mounting structure 402, where the bolt is secured by a nut that is threaded on to the bolt and contacts the fourth wall 334 to secure the component.

The third aperture 408 extends through the front surface 302 and into the third support 312. In some arrangements, the third aperture 408 extends into the third support 312 and does not extend entirely through the third support 312. In some embodiments, the third aperture 408 extends through the third support 312 and into an intermediate surface, where the intermediate surface is in between a top surface and a bottom surface of the third wall 332.

The particular arrangement of the first aperture 404, the second aperture 406, and the third aperture 408 is an example embodiment. In other embodiments, more or fewer apertures can be present and can be arranged in various configurations to support the components being coupled to the engine block 300.

As shown, the engine block 300 includes one front mounting structure 402. In some embodiments, the engine block 300 includes two or more front mounting structures 402.

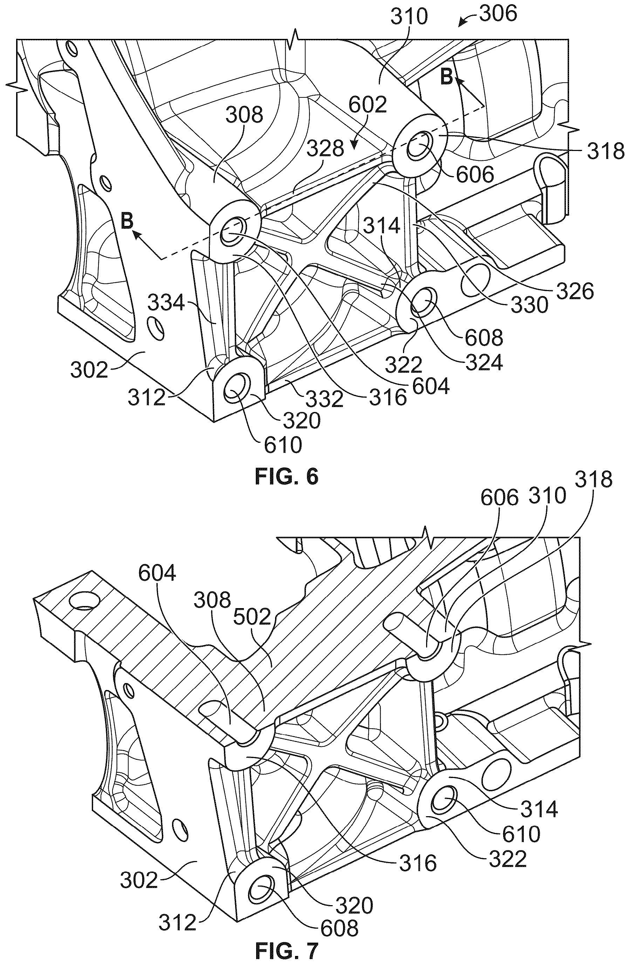

FIG. 6 is an illustration of the flexible mounting structure of FIG. 3 modified to include a mounting structure 602, according to a particular embodiment. In some arrangements, the side mounting structure 602 is implemented in instances where one or more components is mounted to the side of the engine block 300. The side mounting structure 602 includes a first aperture 604, a second aperture 606, and a third aperture 608, and a fourth aperture 610 (collectively referred to as the apertures 404-408). The apertures 604-610 are configured to receive fasteners to couple one or more components to the side mounting structure 602. Accordingly, the apertures 604-610 can include features to receive the fasteners (e.g., threads, countersink, counterbore, etc.). When additional components are coupled to the engine block 300, additional stresses are imparted to the engine block 300. To provide additional support to the engine block 300 to counteract the additional stresses, the first cross brace 324, the second cross brace 326, the first wall 328, the second wall 330, the third wall 332, and the fourth wall 334 reinforce the side mounting structure 602 to withstand the stresses imparted by the additional components. As shown, the apertures 604-610 include four apertures. In various embodiments, the number of apertures in the front mounting structure 402 can include more or fewer apertures.

FIG. 7 is an illustration of a cross-section of the side mounting structure 602 of FIG. 6. The first aperture 604 extends through the first face 316 and into the first support 308, where the first support 308 provides material from which the first aperture 604 is manufactured. In an example embodiment, the first aperture 604 can be manufactured by drilling a hole through the first face 316 and into the first support 308, creating threads in the hole using a tapping tool, and creating a counterbore or countersink at the first face 316. In other embodiments, various manufacturing methods can be implemented to create a variety of connection configurations.

The second aperture 606 extends through the second face 318 and into the second support 310, where the second support 310 provides material from which the second aperture 606 is manufactured. The third aperture 608 extends through the third face 320 and into the third support 312, where the third support 312 provides material from which the third aperture 608 is manufactured. The fourth aperture 610 extends through the fourth face 322 and into the fourth support 314, where the fourth support 314 provides material from which the fourth aperture 610 is manufactured. Various connection configurations can be manufactured as described to provide for one or more components to be coupled to the side mounting structure 602.

As shown, the engine block 300 includes one side mounting structure 602. In some embodiments, the engine block 300 includes two or more side mounting structures 602.

### IV. Example Manufacturing Method

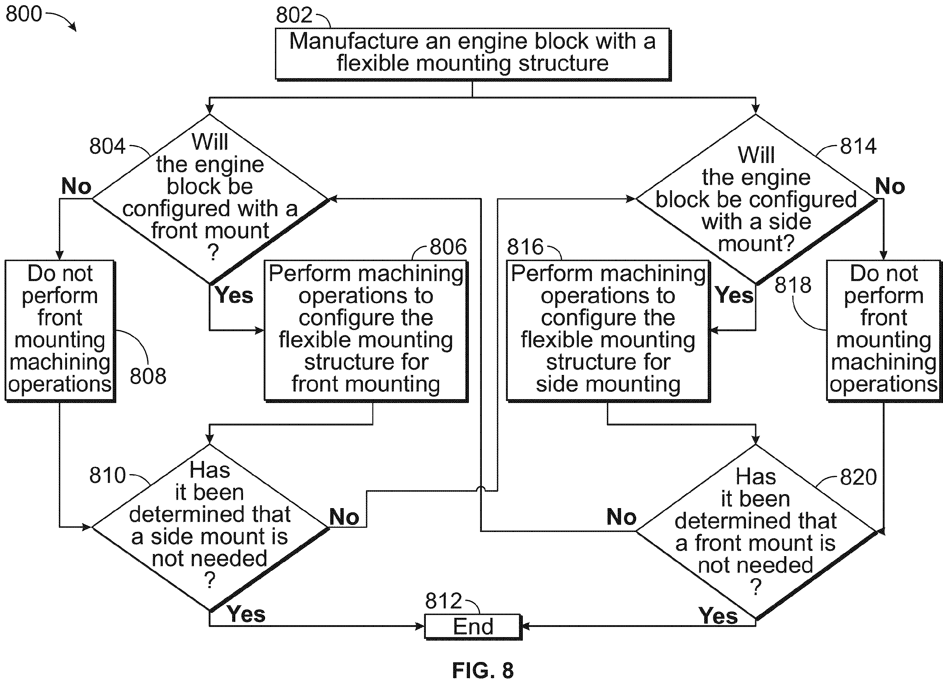

FIG. 8 is a flow diagram of a method 800 of producing an engine block with a mounting structure, according to a particular embodiment. At 802, an engine block with a mounting structure is manufactured. For example, the engine block 300 with the flexible mounting structure 306 is manufactured by a casting process where molten material (e.g., metal) is poured into a mold and the molten material is allowed to cool to form the engine block 300.

At 804, a determination is made as to whether the engine block 300 will be configured with a front mount (e.g., the front mounting structure 402). For example, the engine block 300 may be assigned to a vehicle where additional components will be mounted to the front of the engine block 300. As another example, the engine block 300 may be assigned to a vehicle where the front of the engine block 300 is mounted to the chassis of the vehicle. If the determination is made that the engine block 300 will be configured with a front mount, at 806 additional machining operations are performed to configure the flexible mounting structure 306 with the front mounting structure 402. For example, the apertures 404-408 are created by drilling holes in the front surface 302. The apertures 404-408 may also be tapped to create internal threads configured to interface with fasteners.

If the determination is made that the engine block 300 will not be configured with a front mount, at 808 no machining operations are performed to configure the engine block 300 with the a front mount.

Regardless of whether machining operations are performed to configure the engine block 300 with a front mount, at 810 a decision is made as to whether there is not a need for a side mount. If a side mount is not needed, at 812 the method 800 ends. If it is unknown whether a side mount is needed, at 814 a determination is made as to whether the engine block 300 will be configured with a side mount (e.g., the side mounting structure 602). For example, the engine block 300 may be assigned to a vehicle where additional components will be mounted to the side of the engine block 300. As another example, the engine block 300 may be assigned to a vehicle where the side of the engine block 300 is mounted to the chassis of the vehicle. It should be noted that, while operations 804 and 814 are shown in parallel in Figure 8, these operations can be undertaken either at the same time or sequentially, with either 804 or 814 occurring first.

If the determination is made that the engine block with be configured with a side mount, at 816 additional machining operations are performed to configure the flexible mounting structure 306 with the side mounting structure 602. For example, the apertures 604-610 are created by drilling holes in the first face 316, the second face 318, the third face 320, and the fourth face 322. The holes may also be tapped to create internal threads configured to interface with fasteners.

If the determination is made that the engine block will not be configured with a side mount, at 820 no additional machining operations are performed to configure the engine block 300 with a side mount.

Regardless of whether machining operations are performed to configure the engine block 300 with a side mount, at 818 a decision is made as to whether there is not a need for a front mount. If a front mount is not needed, at 812 the method 800 ends.

In some embodiments, the engine block 300 includes one of either the side mounting structure 602 or the front mounting structure 402. In some embodiments, the engine block 300 includes both the side mounting structure 602 and the front mounting structure 402.

In some arrangements, the method 800 proceeds as described (e.g., the decision regarding a front mount at 804 is the initial decision made). In some arrangements, the initial decision made in the method 800 is the decision regarding a side mount at 814.

Accordingly, manufacturing of engine blocks is made more efficient by producing a base engine block (e.g., the engine block 300) and then performing secondary operations to further customize the base engine block for assembly into a vehicle.

### V. Construction of Example Embodiments

While this specification contains many specific implementation details, these should not be construed as limitations on the scope of what may be claimed but rather as descriptions of features specific to particular implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described as acting in certain combinations and even initially claimed as such, one or more features from a claimed combination can, in some cases, be excised from the combination, and the claimed combination may be directed to a subcombination or variation of a subcombination.

As utilized herein, the term "substantially" and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

The terms "coupled," "attached," and the like, as used herein, mean the joining of two components directly or indirectly to one another. Such joining may be stationary (e.g., permanent) or moveable (e.g., removable or releasable). Such joining may be achieved with the two components or the two components and any additional intermediate components being integrally formed as a single unitary body with one another, with the two components, or with the two components and any additional intermediate components being attached to one another.

It is important to note that the construction and arrangement of the system shown in the various example implementations is illustrative only and not restrictive in character. All changes and modifications that come within the spirit and/or scope of the described implementations are desired to be protected. It should be understood that some features may not be necessary, and implementations lacking the various features may be contemplated as within the scope of the application, the scope being defined by the claims that follow. When the language a "portion" is used, the item can include a portion and/or the entire item unless specifically stated to the contrary.

Also, the term "or" is used in its inclusive sense (and not in its exclusive sense) so that when used, for example, to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, Z, X and Y, X and Z, Y and Z, or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

Although only a few embodiments have been described in detail in this disclosure, those skilled in the art who review this disclosure will readily appreciate that many modifications are possible (e.g., variations in sizes, dimensions, structures, shapes, and proportions of the various elements, values of parameters, mounting arrangements, use of materials, colors, orientations, etc.) without materially departing from the novel teachings and advantages of the subject matter described herein. For example, elements shown as integrally formed may be constructed of multiple components or elements, the position of elements may be reversed or otherwise varied, and the nature or number of discrete elements or positions may be altered or varied. The order or sequence of any method processes may be varied or re-sequenced according to alternative embodiments. Other substitutions, modifications, changes, and omissions may also be made in the design, operating conditions and arrangement of the various exemplary embodiments without departing from the scope of the present invention.

## Claims

1. An engine block, comprising:
an engine block body; and
a mounting structure coupled to the engine block body, the mounting structure comprising:
a first support comprising a first base, a first face, and a first body extending from the first base to the first face;
a second support comprising a second base, a second face, and a second body extending from the second base to the second face; and
a first wall extending from the first support to the second support, the first wall comprising a first front surface, a first back surface, and a first intermediate surface defined by the first front surface and the first back surface;
wherein the first wall defines a first aperture, the first aperture extending through the first wall and at least partially through the first support.

2. The engine block of claim 1, wherein the mounting structure is integrally formed with the engine block body.

3. The engine block of claim 2, wherein the first wall defines a second aperture, the second aperture extending at least partially through the first wall, the second aperture positioned between the first support and the second support.

4. The engine block of claim 3, wherein the first wall defines a third aperture extending through the first wall and at least partially through the second support.

5. The engine block of claim 4, wherein the second aperture extends entirely through the first wall.

6. The engine block of claim 5, wherein the mounting structure further comprises:
a third support comprising a third base, a third face, and a third body extending from the third base to the third face;
a fourth support comprising a fourth base, a fourth face, and a fourth body extending from the fourth base to the fourth face;
a second wall extending from the first support to the third support;
a third wall extending from the third support to the fourth support; and
a fourth wall extending from the fourth support to the second support.

7. The engine block of claim 6, wherein the mounting structure further comprises:
a first cross brace extending from the first support to the fourth support; and
a second cross brace extending from the second support to the third support;
wherein the first cross brace intersects the second cross brace.

8. The engine block of claim 7, wherein the first aperture extends entirely through the first front surface and the first support, the first aperture extending partially through the second wall.

9. The engine block of claim 8, wherein the third aperture extends entirely through the first front surface and the second support, the third aperture extending partially through the fourth wall.

10. An engine block, comprising:
an engine block body; and
a mounting structure coupled to the engine block body, the mounting structure comprising:
a first support comprising a first base, a first face, and a first body extending from the first base to the first face, the first support defining a first aperture extending through the first face and partially through the first body;
a second support comprising a second base, a second face, and a second body extending from the second base to the second face, the second support defining a second aperture extending through the second face and partially through the second body;
a third support comprising a third base, a third face, and a third body extending from the third base to the third face, the third support defining a third aperture extending through the third face and partially through the third body;
a fourth support comprising a fourth base, a fourth face, and a fourth body extending from the fourth base to the fourth face, the fourth support defining a fourth aperture extending through the fourth face and partially through the fourth body; and
a first wall extending from the first support to the second support.

11. The engine block of claim 10, wherein the mounting structure is integrally formed with the engine block body.

12. The engine block of claim 11, further comprising:
a first cross brace extending from the first support to the fourth support; and
a second cross brace extending from the second support to the third support.

13. The engine block of claim 12, further comprising:
a second wall extending from the first support to the third support;
a third wall extending from the third support to the fourth support; and
a fourth wall extending from the fourth support to the second support.

14. A method for manufacturing an engine block with a flexible mounting structure, comprising:
providing an engine block with a side surface and a front surface, the engine block comprising:
a first support extending from the side surface of the engine block;
a second support extending from the side surface of the engine block;
a third support extending from the side surface of the engine block;
a fourth support extending from the side surface of the engine block; and
a first wall extending from the side surface of the engine block, the first wall coupled to the first support and the second support, the first wall comprising a first front surface, a first back surface, and a first intermediate surface defined by the first front surface and the first back surface, wherein the first front surface is substantially coplanar with the front surface of the engine block;
determining whether a component to be mounted to the engine block will be mounted to the front surface of the engine block; and
in response to determining that the component will be mounted to the front surface of the engine block, performing secondary machining operations to configure the front surface of the engine block to receive the component.

15. The method of claim 14, further comprising;
determining whether a component to be mounted to the engine block will be mounted to the side surface of the engine block; and
in response to determining that the component will be mounted to the side surface of the engine block, performing secondary machining operations to configure the side surface of the engine block to receive the component.

16. The method of claim 14, wherein configuring the front surface of the engine block to receive the component comprises:
creating a first aperture through the first front surface and at least partially through the first support; and
creating a second aperture at least partially through the first wall and between the first support and the second support.

17. The method of claim 16, further comprising creating a third aperture through the first front surface and at least partially through the second support.

18. The method of claim 15, wherein configuring the side surface of the engine block to receive the component comprises:
creating a first aperture in a first face of the first support through the first face and partially through the first support; and
creating a second aperture in a second face of the second support through the second face and partially through the second support.

19. The method of claim 18, further comprising creating a third aperture through a third face of the third support and partially through the third support.

20. The method of claim 19, further comprising creating a fourth aperture through a fourth face of the fourth support and partially through the fourth support.
